# EUROPÄISCHE PATENTANMELDUNG

(11) **EP 2 345 321 A2**
(43) Veröffentlichungstag der Anmeldung: **20.07.2011**
(21) Anmeldenummer: 11000312.6
(22) Anmeldetag: 17.01.2011
(51) Int. Cl.: A01D 57/20, A01D 61/02

(54) **Förderband für Landmaschinen, insbesondere für Schwader**

(30) Priorität: 18.01.2010 DE 102010004799
(71) Anmelder: ARTEMIS Kautschuk- und Kunststofftechnik GmbH & Cie, D-30559 Hannover (DE)
(72) Erfinder: Gentz, Hans-Jürgen, 31162 Bad Salzdetfurth (DE); Mulder, Jan, Harm, 7751 DN Dalen (NL)
(74) Vertreter: Seewald, Jürgen

(57) **Zusammenfassung**

**Die** vorliegende Erfindung **betrifft ein** Förderband für Landmaschinen, insbesondere **für** Schwader, mit mindestens zwei parallel zueinander **ver**laufenden Zugmitteln und einem zwischen den **Zugmittel** angeordneten **Flächengebilde** zur Aufnahme **von Fördergut** Aufgabe der **Efindung** ist es, ein derartiges Förderband zur Verfügung zu stellen, welches sehr robust ausgeführt ist und daher **lange** Standzeiten gewährleistet. Gelöst wird die Aufgabe dadurch, dass die Zugmittel als **endlos** gewickelte Riemen (2) aus einem **gewebelageverstärkten, _{V}ernetztenPolymer** ausgeführt sind, wobei auf die Riemen (2) ein diese verbindendes Flächengebilde (4) aus einem **gewebelageverstärkten ,** vemetzten **Polymer aufvul**kanisiert ist.

## Beschreibung

Die vorliegende Erfindung betrifft ein Förderband für Landmaschinen, insbesondere für Schwader, gemäß dem Oberbegriff des Anspruchs 1.

Förderbänder kommen in vielen Landmaschinen zum Einsatz. Sie müssen möglichst robust ausgeführt sein, um unter den häufig rauen Arbeiftbe**dingungen** eine große Standzeit zu erreichen **lnsbesondere** bei Schwadern, die bei **zuggeschwindigkeiten**von häufig über 30 km/h arbeiten, sind die eingesetzten Förderbänder wegen der hohen Arbeitsgeschwindigkeit großen dynamischen Belastungen sowie auch großen Biegebeanspruchungen aufgrund der kleinen Umlenkradien auf den Antriebs- und Umlenkwalzen ausgesetzt.

**ln** der EP 1 300 062 B1 ist ein Förderband für Landmaschinen beschrieben. Dieses Förderband weist zwei parallel zueinander verlaufende Zugmittel in Form von Nockenriemen auf, die über Antriebs- und Umlenkrollen geführt sind. Die Nockenriemen sind durch in gleichmäßigen Abständen über die Länge des Förderbandes verteilte Querstäbe miteinander verbunden. Dazu sind die Querstäbe an ihren Enden abgeflacht und in diesen abge**flachten** Bereichen mit den Nockenriemen z. B. durch Vemietung verbunden. Zwischen den beiden Nockenriemen ist ein endloses Flächengebilde angeordnet, welches an seiner Unterseite Profile **aufweist,** die einen durchgehenden Kanal zur Aufnahme jeweils eines Querstabes **aufweisen.** Dabei sind die Profile mit der Unterseite des Flächengebildes verbunden. Diese Verbindung kann durch Angießen an die Unterseite des Flächengebildes unmittelbar bei der Formgebung der Profile erfolgen oder aber dadurch, **dass** die Profile durch Extrusion **vorgefertigt**werden und anschließend an die Unterseite des Flächengebildes angeklebt oder mit dieser verschweißt werden. **ln** einer Aus**führungsform** des Förderbandes kann dessen Flächengebilde aus Kunststoff oder Gummi bestehen oder mit Kunststoff oder Gummi überzogen sein.

Aufgabe der vorliegenden Erfindung ist es, ein gattungsgemäßes Förderband zur Verfügung zu stellen, welches sehr robust ausgeführt ist und daher lange Standzeiten gewährleistet.

Diese Aufgabe wird **erfindungsgemäß** mit einem Förderband gelöst, welches die Merkmale des Anspruchs 1 **aufweist.**

Ein derartiges Förderband besteht einstückig aus einem vulkanisierten, gewebelagerverstärktem Polymer und ist daher sehr robust. Zur Robustheit tragen auch die endlos gewickelten, **als** Zugmittel eingesetzten Riemen bei, da diese die Dauerzugfestigkeit ihrer Gewebelagen erreichen und somit die bei dem Einsatz des Förderbandes wirkenden Zugkräfte aufnehmen können. Unter einem **"endlos** gewickelten Riemen" ist ein Riemen zu verstehen, der z. **B.** im **Falle** der Verwendung eines Elastomers folgendermaßen hergestellt wird: Ein einseitig gummierter Gewebestreifen wird zu einem Wickel gewickelt, der im Wesentlichen die geometrische Form des fertigen Riemens hat. Bei diesem Wickel liegen mindestens zwei Gewebelagen mit der dazwischen angeordneten Gummischicht aufeinander. Auf diesem Wickel wird ggf. innen eine weitere Gummischicht aufgelegt, die **der Ausbildung** der Lauffläche des Riemens dient. Dieses Sandwich wird dann in eine formgebende Vulkanisierpresse eingelegt und **vulkanisiert.** Dabei kann gleichzeitig aus der innenliegenden Gummischicht eine ggf strukturierte Lauffläche des Riemens ausgebildet werden.

**In** vorteilhafter Welterbildung der Erfindung sind auf das Flächengebilde Mitnehmerleisten aus vernetzbaren Polymer **aufvulkanisiert.** Dieses **Aufvul^{.}** kanisieren erfolgt gleichzeitig mit dem Aufvulkanisieren des Flächengebildes auf die **Zugriemen.** Das Förderband **blelbt** damit weiter einstückig. Das **Aufvulkanisieren** der Mitnehmerleisten kann dazu benutzt werden, die Enden des Flächengebildes Stoß an Stoß zu legen, und diese Stoßstelle durch das **Aufvulkanisieren elner** Mitnehmerleiste an der Stoßstelle sowie durch das Vulkanisieren des Flächengebildes selbst zu schließen, so dass das Fächengebilde eine endlose Schleifie **bildet**

**ln elner** Ausfuhrungsform der Erfindung sind die Mitnehmerleisten mit durchgehenden Aufnahmen ausgestattet, in die vor dem Vulkanisieren Verstärkungsprofile eingelegt werden. Diese Verstärkungsprofile geben zum Einen den Mitnehmerleisten eine größere Festigkeit und verhindern zum Anderen ein Durchhängen des Flächengebildes zwischen den als **Zugmittel** dienenden Riemen.

Es ist weiterhin von Vorteil, wenn das Flächengebilde auf seiner zwischen den Riemen freiliegenden Unterseite im Wesentlichen unbeschichtet ist. Dadurch **verringert** sich die Reibung des Förderbandes auf Stützkonstruktionen, was sich positiv auf die erforderliche Antriebsleistung des Förderbandes niederschlägt.

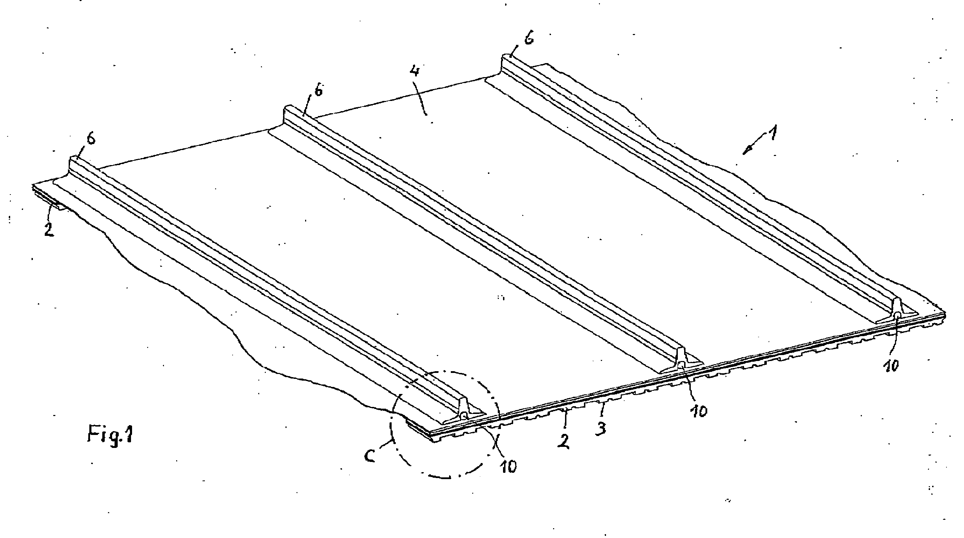

Die **Erfindung** wird nachstehend anhand eines Ausführungsbeispiels näher **erläutert,** ln der dazugehörigen Zeichnung zeigt
- Fig. 1: einen perspektivischen Blick von schräg oben auf **einen** Abschnitt eines **erfindungsgemäßen** Förderbandes,

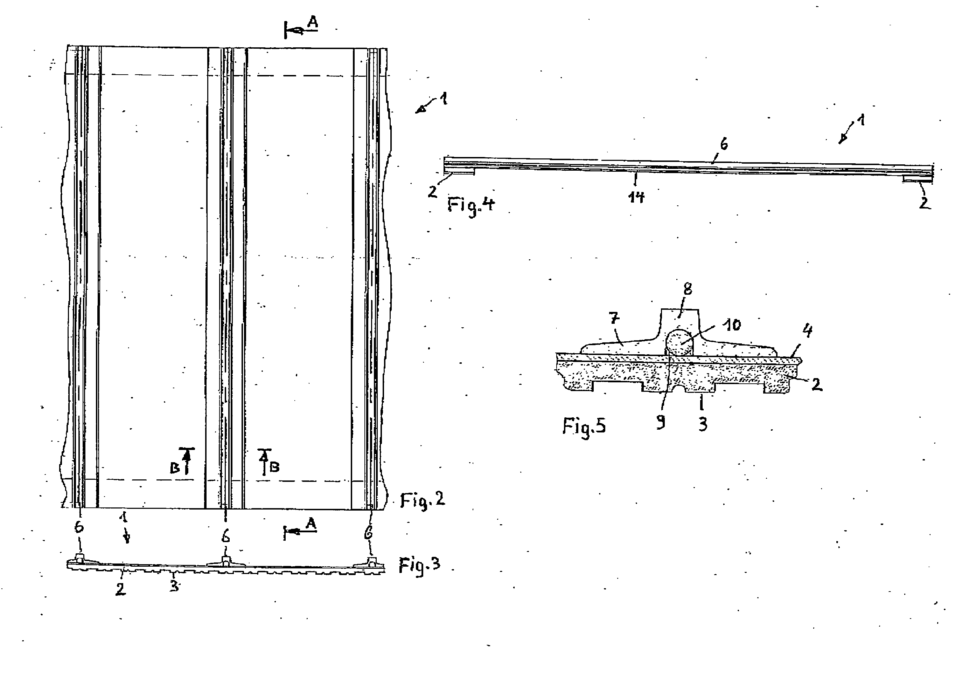

- Fig. 2: eine Draufsicht auf die Darstellung gemäß Figur 1,
- Fig. 3: eine Seitenansicht der Darstellung gemäß Figur 2,
- Fig. 4: einen **SchnittA-A** gemäß Figur 2,
- Fig. 5: einen Schnitt **B-B gemäß** Figur 2 in vergrößerter Darstellung,

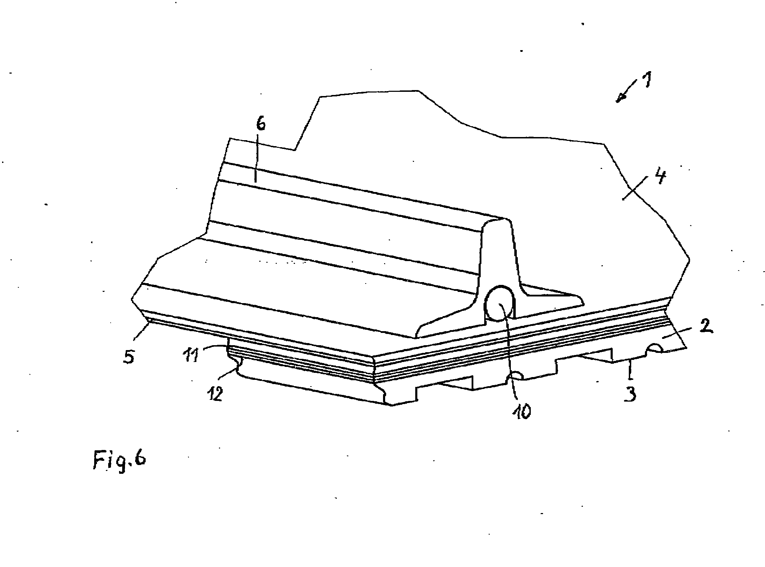

- Fig. 6: einen vergrößerten Ausschnitt C gemäß Figur 1, und

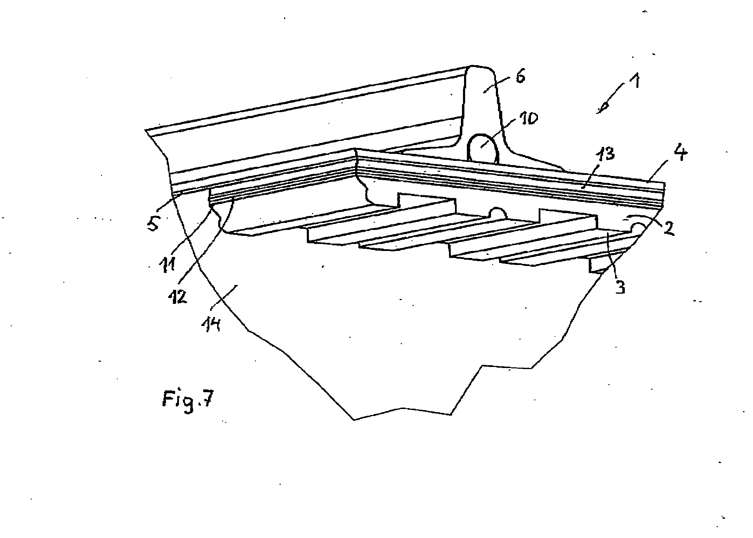

- Fig. 7: einen Blick von schräg unten auf die Darstellung gemäß Figur 6.

Das in der Zeichnung gezeigte Förderband 1 weist zwei voneinander parallel beabstandete Zugmittel auf, die als endlos **gewickelte** Riemen 2 ausgeführt sind. Diese werden hergestellt, indem zunächst ein einseitig gum**mierter Gewebestreifen** zu einem Wickel gewickelt wird, derart, dass mindestens zwei Gewebelagen **11** mit den dazwischen angeordneten Gummischichten **12** aufeinander liegen. Dieser Wickel wird anschließend in eine formgebende Vulkanisierpresse eingelegt und vulkanisiert. Dabei wird gleichzeitig die Struktur der Lauffläche 3 der Riemen 2 ausgeformt, mit denen das Förderband 1 über Antriebs- und Umlenkrollen geführt ist. Das Gewebe ist sehr zugfest, so dass die **erforderliche** Antriebskräfte problemlos auf das Förderband 1 übertragen werden können.

Zum Förderband 1 **gehört** weiterhin ein Flächengebilde 4, welches aus einer einseitig **gummierten Gewebelage** 5 besteht. Die Riemen 2 verlaufen längs der Ränder des Flächengebildes 4. Zum Aufvulkanisieren des Flä**chengebildes** 4 auf die Riemen 2 wird auf die nicht gummierte Unterseite 14 des **Flächengebildes** 4 an seinen **Rändem** in der Breite der Riemen 2 ein Gummistreifen 13 aufgetragen.

Auf der Oberseite des Flächengebildes 4 sind parallel voneinander beabstandete Mitnehmerleisten 6 angeordnet. Diese bestehen aus einer breiten Basis 7, von der mittig ein Steg 8 nach oben ragt. In der Mitte der Basis 7 öffnet sich eine bis in den Steg 8 erstreckende im Querschnitt U-förmige Nut 9. Diese dient der Aufnahme eines Stabes 10 aus GFK, der sich **über** die gesamte Länge der Mitnehmerleiste 6 erstreckt.

Zur **Fertigstellung**des Förderbandes 1 wird das **Flächengebilde** 4 mit seinen Gummistreifen 13 auf die Riemen 2 aufgelegt. Anschließend werden die **Mitnehmerleisten** 6 mit einliegendem Stab 10 auf der gummierten **Ober**seite des Flächengebildes 4 angeordnet. Das Verbinden des Flächengebildes 4 mit den Riemen 2 und den **Mitnehmerleisten** 6 **erfolgt** durch Vulkanisation. Dazu werden zum Wärmeeintrag sektionsweise **Vulkanisationsplatten** aufgelegt, die Aussparungen für die **Mitnehmerleisten.6** haben und diesen beim Vulkanisationsvorgang ihre endgültige Form geben. Zum **Endlosma**chen des Flächengebildes **4** werden dessen beiden Enden Stoß an Stoß gelegt und der Stoß durch eine **Mitnehmerleiste** 6 überdeckt. Durch den Vulkanisationsvorgang wird der Stoß **geschlossen.** Damit ist das Flächengebilde 4 endlos. Während des **Vulkanisationsvorganges** dringt Gummimasse auch in die **U-förmigen Nuten** 9 **ein,** so dass diese nach außen geschlossen und die Stäbe 10 einvulkanisiert sind. Am Ende des Vulkanisationsvorganges liegt ein einstückiges Förderband 1 vor.

## Patentansprüche

1. Förderband für **Landmaschinen,** insbesondere für Schwader, mit mindestens zwei parallel zueinander verlaufenden Zugmitteln und einem zwischen den **Zugmittel** angeordneten Flächengebilde zur Aufnahme von Fördergut, **dadurch gekennzeichnet,dass** die Zugmittel als **end los** gewickelte Riemen (2) aus einem **gewebelageverstärkten,** vemetzten Polymer ausgeführt sind, wobei auf die Riemen (2) ein diese **ver**bindendes **Flächengebilde (4)** aus einem gewebelageverstärkten, **ver**netzten Polymer **aufvulkanisiert** ist.

2. Förderband nach Anspruch 1, **dadurch gekennzeichnet, dass** auf das **Flächengebilde** (4) Mitnehmerleisten (6) aufvulkanisiert sind.

3. Förderband nach **Anspruch** 1, **dadurch gekennzeichnet, dass** auf das **Flächengebilde** (4) Mitnehmerleisten (6) aufgeklebt sind.

4. Förderband nach Anspruch 2 oder 3, **dadurch gekennzeichnet,dass** die **Mitnehmerleisten** (6) eine Ausnehmung (9) **für** die Aufnahme eines **Verstärkungsprofils** (10) **autwelsen.**

5. Förderband nach einem der vorstehenden Ansprüche, **dadurch gekennzeichnet, dass** das **Flächengebilde** (4) auf seiner zwischen den Riemen (2) freiliegenden Unterseite (14) im Wesentlichen unbeschichtet ist
